# EUROPÄISCHE PATENTSCHRIFT

(11) **EP 1 788 350 B1**
(45) Veröffentlichungstag und Bekanntmachung des Hinweises auf die Patenterteilung: **04.01.2012**
(21) Anmeldenummer: 06023615.5
(22) Anmeldetag: 14.11.2006
(51) Int. Cl.: G01C 15/00, G01C 15/02, G01C 15/10

(54) **Lasermessgerät**
Laser measuring device
Dispositif de mesure à laser

(30) Priorität: 21.11.2005 DE 202005018286 U
(43) Veröffentlichungstag der Anmeldung: 23.05.2007
(73) Patentinhaber: Stabila Messgeräte Gustav Ullrich GmbH, 76855 Annweiler (DE)
(72) Erfinder: Kallabis, Gabriel, 76848 Spirkelbach (DE)
(74) Vertreter: Stoffregen, Hans-Herbert

(56) Entgegenhaltungen:
- EP-A1- 1 736 732
- WO-A1-2005/090911
- DE-A1- 4 007 245
- US-A- 5 894 123

## Beschreibung

Die Erfindung bezieht sich auf ein Lasermessgerät umfassend ein Gehäuse mit in diesem vorhandener Lasereinrichtung zum Erzeugen und Projizieren zumindest eines Laserstrahls senkrecht zu einer Ausrichtfläche des Gehäuses oder einer Ausrichtfläche einer mit dem Gehäuse verbindbaren Halterung.

Aus der DE-T-694 27 987 ist ein Lasermessgerät bekannt, durch das vier senkrecht zueinander stehende Laserstrahlen erzeugbar sind, die zum Loten und Nivellieren benutzt werden. Dabei ist die den Laserstrahl erzeugende Lasereinrichtung, die die Laserlichtquelle sowie eine Optik umfasst, pendelnd aufgehängt, um eine Selbstzentrierung des Lotstrahls zu erreichen.

Entsprechende Lasermessgeräte können auch eine zum Beispiel über Magnete mit dem Gehäuse des Lasermessgerätes verbundene Wandhalterung aufweisen, um das Messgerät unabhängig von einem Stativ oder einer sonstigen Standfläche einsetzen zu können. Die Wandhalterung kann dabei auch derart zu dem Gehäuse ausgerichtet werden, dass erstere als Aufnahme für ein Stativ dient.

In der JP-A-2000028359 wird ein Lasermessgerät mit drei Stativbeinen beschrieben.

Entsprechende Lasermessgeräte sollen auch die Möglichkeit bieten, lotrecht zu einer Öffnung im Bodenbereich eines Raums in dessen Deckenbereich eine Markierung abzubilden, um zum Beispiel ein Steigrohr anzuordnen, das zwischen den Öffnungen verläuft. Hierbei treten häufig Schwierigkeiten auf, da das Ausrichten des Lotstrahls in Richtung der Decke dann nicht hinreichend genau ist, wenn die Verlängerung des Lotstrahls bzw. ein antiparallel zum Lotstrahl verlaufender weiterer Laserstrahl die Öffnung nicht mittig durchsetzt.

Die DE-A-40 07 245 bezieht sich auf eine Einrichtung zum Zentrieren eines geodätischen Instrumentes. Hierzu ist das Messinstrument gegenüber einem Stativ über einen Dreifuß zentrierbar.

Ein Gehäuse eines Rotationslasers weist nach der US-A-5,894,123 Stellschrauben auf, über die eine Justierung möglich ist.

Gegenstand der EP-A-1 736 732 ist ein Verfahren zum Horizontieren eines Messgerätes. Hierzu weist das Messgerät Stellschrauben auf, um eine Justage zu ermöglichen.

Der vorliegenden Erfindung liegt die Aufgabe zugrunde, ein Lasermessgerät zuvor beschriebener Art so weiterzubilden, dass ein überaus präzises Ausrichten eines Laserstrahls zum Mittelpunkt einer Öffnung in einer Raumbegrenzung wie Boden möglich ist, ohne dass es aufwendiger Justierarbeiten bedarf.

Zur Lösung der Aufgabe sieht die Erfindung im Wesentlichen vor, dass der Ausrichtfläche zumindest drei synchron und gekoppelt verstellbare Positionierelemente zugeordnet sind, dass jedes Positionierelement einen Arm umfasst, der um eine senkrecht zu der Ausrichtfläche oder zu einer von Auflageflächen der Arme aufgespannten Ebene verlaufende Achse schwenkbar ist und in seinem freien Endbereich einen von der Ausrichtfläche weggerichteten abragenden Vorsprung aufweist, dass die Vorsprünge auf einem Kreis liegen, dessen Mittelpunkt von dem senkrecht zu der Ausrichtfläche verlaufenden Laserstrahl oder dessen Verlängerung durchsetzt ist, wobei die Positioniermittel derart angeordnet sind, dass beim synchronen Verstellen der Positioniermittel die Vorsprünge unabhängig vom Schwenkwinkel stets auf einem Kreis liegen, wobei die Kreise unterschiedlicher Durchmesser denselben Mittelpunkt aufweisen, der von dem Laserstrahl oder dessen Verlängerung durchsetzt ist.

Dabei umfasst jedes Positioniermittel oder -element insbesondere einen Arm, der um eine senkrecht zu der Ausrichtfläche verlaufende Achse schwenkbar ist und in seinem freien Endbereich einen von der Ausrichtfläche weggerichteten abragenden Vorsprung aufweist. Der Vorsprung kann eine Zylinderform aufweisen, deren Längsachse parallel zu der Schwenkachse des Arms verläuft.

Alternativ können die Positioniermittel oder -elemente auch entlang von Nuten oder Kulissenschlitzen verstellbare Abstützungen aufweisen, die über ein Mitnehmerelement verstellbar sind, das seinerseits z. B. über Exzenterkurven oder exzentrisch verlaufende Nuten das synchrone radiale Verstellen der Positioniermittel bewirkt.

Erfindungsgemäß erfolgt eine Selbstzentrierung des Gehäuses und damit des Laserstrahls über die Positioniermittel bzw. -elemente, die zu einer Öffnung derart ausrichtbar sind, dass die Vorsprünge in diese hineinragen, so dass dann, wenn diese die Innenwandung der Öffnung berühren, bei der es sich auch um ein Rohr handeln kann, automatisch der Laserstrahl den Mittelpunkt der Öffnung durchsetzt. Dabei wird von einer ordnungsgemäßen Bauausführung ausgegangen, d.h. die Fläche, die von der Öffnung durchsetzt wird, ist im hinreichenden Umfang zur Horizontalen ausgerichtet, so dass infolgedessen eine präzise lotrecht über der Öffnung verlaufende Markierung mittels des Laserstrahls auf der gegenüberliegenden Fläche abbildbar ist.

Gleiche Überlegungen gelten auch für parallel zur Vertikalen verlaufende Begrenzungsflächen, wobei anstelle eines Lotstrahls ein Horizontalstrahl benutzt wird.

Erfindungsgemäß wird mit rein mechanischen Hilfsmitteln eine Selbstzentrierung des Laserstrahls ermöglicht, so dass fehlerhafte Ausrichtungen des Laserstrahls zu einer Öffnung oder einem sonstigen Ausgangsbereich durch einen das Lasermessgerät bedienenden Benutzer ausgeschlossen sind.

Die auch als Füße zu bezeichnenden Positioniermittel oder -elemente sind synchron und gekoppelt verstellbar, wobei insbesondere vorgesehen ist, dass von jedem Arm ein die Schwenkachse konzentrisch umgebendes Zahnrad ausgeht, das mit einem zentralen Zahnrad kämmt. Dieses kann zum Beispiel dann über eine Rändelmutter derart verstellt werden, dass die von den Armen abragenden Vorsprünge an der Innenfläche der Öffnung anliegen und somit auf einem Kreis .positioniert sind, dessen Mittelpunkt mit dem Mittelpunkt der Öffnung übereinstimmt.

In Weiterbildung der Erfindung ist vorgesehen, dass die Ausrichtfläche eine von dem Laserstrahl oder einem in dessen Verlängerung verlaufenden zweiten Laserstrahl durchsetzte Durchbrechung aufweist, zu der koaxial der Kreis verläuft, auf dem die Positioniermittel bzw. deren Vorsprünge liegen.

Der Begriff Kreis schließt dabei Kreise unterschiedlicher Durchmesser in Abhängigkeit von der Ausrichtung auf den Durchmesser der Öffnung ein, wobei sämtliche Kreise den gleichen Mittelpunkt aufweisen.

Kann ein Verstellen der Positioniermittel, d. h. deren Arme oder gleich wirkenden Elemente durch von Hand erfolgendes Verstellen vorgenommen werden, so besteht auch die Möglichkeit, dass zumindest eines der Positioniermittel bzw. -elemente in Richtung zu vergrößerndem Kreisdurchmesser kraftbeaufschlagt wie federvorgespannt ist. Somit ergibt sich ein automatisches Anlegen der Positioniermittel bzw. -elemente bzw. deren Vorsprünge an den Innenflächen der Öffnung.

Ist die Ausrichtfläche zum Beispiel Bodenfläche des Gehäuses, so kann diese bevorzugterweise auch Außenfläche der mit dem Gehäuse verbundenen Halterung sein. Dabei verläuft die Ausrichtfläche der Halterung parallel zur Bodenfläche des Gehäuses.

Die in dem Gehäuse angeordnete Lasereinrichtung selbst ist selbstzentrierend und insbesondere pendelnd angeordnet. Ferner kann der von der Laserlichtquelle erzeugte Laserstrahl in vier senkrecht zueinander verlaufende Teilstrahlen aufgeteilt werden, von denen zwei antiparallel zueinander und lotrecht verlaufen.

Die in der Ausrichtfläche vorhandene Durchbrechung dient bevorzugterweise gleichzeitig als Aufnahme für ein Stativ. Unabhängig hiervon kann die Durchbrechung von dem antiparallel zu dem von den Positioniermitteln weggerichteten Laserstrahl verlaufenden weiteren Laserstrahl durchsetzt sein.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: eine erste perspektivische Darstellung eines Lasermessgeräts mit nach innen verschwenkten Positioniermitteln,
- Fig. 2: das Lasermessgerät nach Fig. 1 mit nach außen verschwenkten Positioniermitteln,
- Fig. 3: eine Seitenansicht des Lasermessgerätes nach den Fig. 1 und 2,
- Fig. 4: eine Unteransicht des Lasermessgerätes mit nach innen verschwenkten Positioniermitteln,
- Fig. 5: die Unteransicht des Lasermessgerätes gemäß Fig. 5 mit nach außen verschwenkten Positioniermitteln,
- Fig. 6: eine weitere Ausführungsform eines Lasermessgerätes in perspektivischer Darstellung,
- Fig. 7: das Lasermessgerät gemäß Fig. 6 in Explosionsdarstellung und
- Fig. 8: einen Abschnitt des Lasermessgerätes gemäß Fig. 1 - 5.

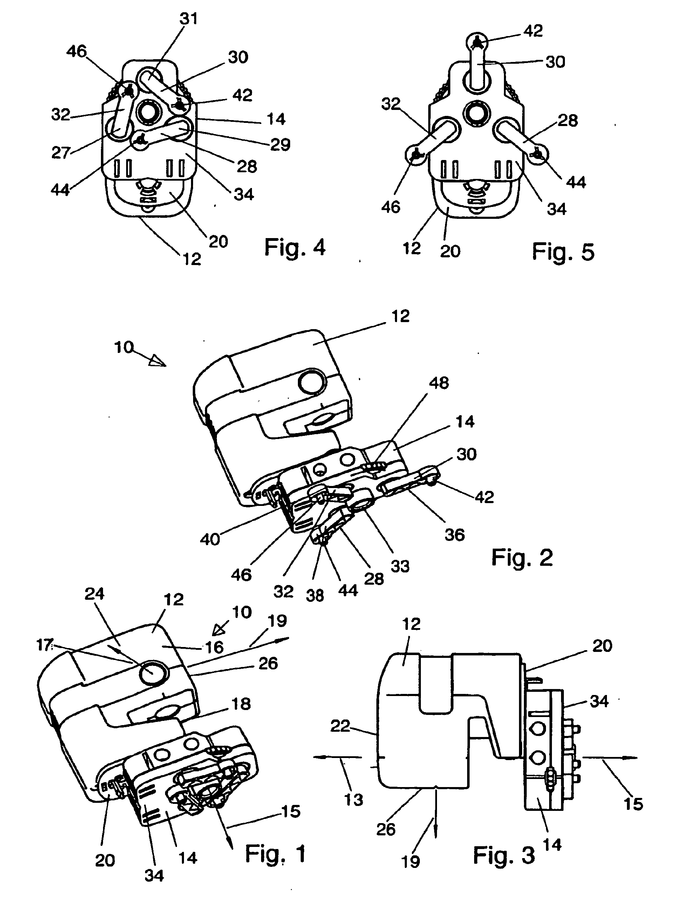

In den Fig. 1 - 5 ist eine erste Ausführungsform eines Lasermessgerätes 10 rein prinzipiell dargestellt, das ein Gehäuse 12 umfasst, das mit einer Halterung 14 lösbar verbunden ist. Die Verbindung zwischen dem Gehäuse 12 und der Halterung 14 kann dabei über Magnete oder sonstige Verbindungsmittel erfolgen, ohne dass hierdurch die Erfindung eingeschränkt wird.

Das Gehäuse 12 besteht aus einem Kopfteil 16, das in Bezug auf dessen Fußteil 18 überhängend ausgebildet ist.

Das Lasermessgerät 10, d.h. das Gehäuse 12 umfasst eine nicht dargestellte Laserlichtquelle mit Optik, mit der der von der Laserlichtquelle erzeugte Laserstrahl in vier senkrecht zueinander stehende Laserstrahlen 13, 15, 17, 19 aufgeteilt wird, um Loten und Nivellieren zu können.

Zwei von den vier Strahlen verlaufen antiparallel und bei horizontaler Ausrichtung der Bodenfläche 20 des Gehäuses 12 lotrecht, wobei einer der Lotstrahlen 13 die Kopffläche 22 des Gehäuses 12 und der andere Lotstrahl 15 die Unterseite des überhängenden Gehäuses 12 und in Abhängigkeit von der Erstreckung des Fußteils 18 auch dessen Bodenfläche 20 durchsetzt. Ein weiterer senkrecht zu diesen verlaufender Laserstrahl 17 durchsetzt eine Seitenwandung 24 und der vierte Laserstrahl 19 die Stirnfläche 26 des Gehäuses 12. Durch eine diesbezügliche Ausbildung der Lasereinrichtung wird jedoch die erfindungsgemäße Lehre nicht eingeschränkt, gleichwenn die Aufspaltung des Laserstrahls in die vier senkrecht zueinander verlaufende Einzelstrahlen 13, 15, 17, 19 als bevorzugt zu bezeichnen ist.

Um das Lasermessgerät 10 derart einzusetzen, dass der Lotstrahl 15 zum Mittelpunkt einer Öffnung in einer Bodenfläche eines Raums ausgerichtet werden kann, ist erfindungsgemäß vorgesehen, dass von einer Ausrichtfläche des Gehäuses 12 bzw. der Halterung 14, die senkrecht zu dem Lotstrahl 15 verläuft, Positioniermittel bzw. -elemente ausgehen, die synchron verschwenkbar sind, um dann, wenn die Positionierelemente an der Innenbegrenzung der Öffnungen anliegen, eine Selbstzentrierung des Lotstrahls 15 zum Mittelpunkt der Öffnung gegeben ist und somit auf zur Bodenfläche gegenüberliegender Fläche in lotrechter Verlängerung einer Markierung abgebildet wird. Das synchrone Verschwenken erfolgt dabei bevorzugterweise durch eine Zwangskopplung der Positioniermittel.

Ist bevorzugterweise die erfindungsgemäße Lehre zum lotrechten Ausrichten von Öffnungen in einer Boden- und einer Deckenwandung eines Raums zu nutzen, gilt Entsprechendes für das horizontale fluchtende Ausrichten von Öffnungen in vertikal verlaufenden und zueinander beabstandeten Wandungen. In diesem Fall verläuft der Laserstrahl horizontal.

Die Positioniermittel bzw. -elemente sind im Ausführungsbeispiel als Füße 28, 30, 32 ausgebildet, die um Achsen 27, 29, 31 verschwenkbar sind, die parallel zu dem Lotstrahl 15 und somit senkrecht zu der Ausrichtfläche verlaufen, die im Ausführungsbeispiel Außenfläche 34 der Halterung 14 ist, die parallel zu der Bodenfläche 20 des Gehäuses 12 bzw. dessen Fußes 18 verläuft.

Die Füße 28, 30, 32 bestehen aus verschwenkbaren Armen 36, 38, 40, von denen endseitig Vorsprünge 42, 44, 46 abragen, die jeweils eine Zylinderform mit einer Längsachse aufweisen, die parallel zu den Schwenkachsen 27, 29, 30 verlaufen. Die Füße 28, 30, 32 bzw. Arme 36, 38, 40 sind synchron und zwangsgekoppelt verschwenkbar derart, dass unabhängig vom Schwenkwinkel die Vorsprünge 42, 44, 46 stets auf einem Kreis liegen, wobei die Kreise unterschiedlicher Durchmesser denselben Mittelpunkt aufweisen. Dieser Mittelpunkt ist derart zu dem Lotstrahl 15 ausgerichtet, dass dieser den Mittelpunkt durchsetzt, sofern bei pendelnd aufgehängter Pendeleinrichtung das Gehäuse 12, d.h. dessen Bodenfläche 20 bzw. die parallel zu dieser verlaufende Ausrichtfläche 34 horizontal ausgerichtet ist. Entsprechend verläuft die von den Unterseiten der Arme 36, 38, 40 aufgespannte Ebene, über die die Vorsprünge 42, 44, 46 vorstehen, parallel zu der Ausrichtfläche 34 und damit der Bodenfläche 30 des Gehäuses 12.

Durch die diesbezüglichen Maßnahmen erfolgt eine Selbstzentrierung des Lotstrahls 15 zu dem Mittelpunkt einer Öffnung, an deren Innenseiten die Vorsprünge 42, 44, 46 anliegen.

Im Ausführungsbeispiel liegen die Schwenkachsen 27, 29, 31 der Arme 36, 38, 40 auf einem Kreis, der konzentrisch zu einer Durchbrechung 33 verläuft, die als Aufnahme für ein Stativ dienen kann, auf das das Gehäuse 12 bzw. die Halterung 14 aufsetzbar wie aufschraubbar ist, wenn eine erfindungsgemäße Nutzung nicht erfolgt.

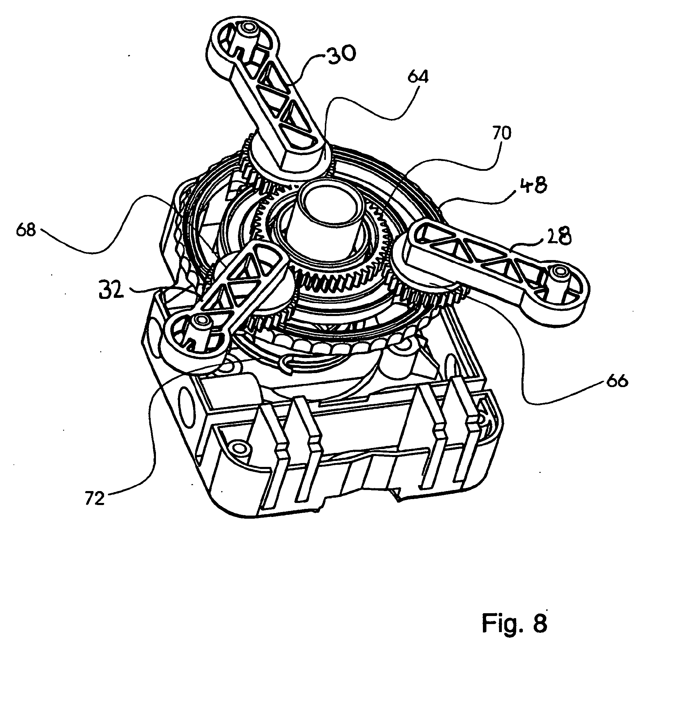

Die zwangsgekoppelte Bewegung, d.h. das Verschwenken der Füße 28, 30, 32 erfolgt insbesondere dadurch, dass von jedem Arm 36, 38, 40 ein Satellitenzahnrad 64, 66, 68 ausgeht (Fig. 8), das koaxial die jeweilige Schwenkachse 27, 29, 31 umgibt. Die Satellitenzahnräder 64, 66, 68 jeweils gleichen Durchmessers wirken sodann mit einem zentralen Zahnrad 70 zusammen, wodurch die zur Realisierung der Erfindung erforderliche synchrone Bewegung der Arme 36, 38, 40 sichergestellt ist. Das zentrale Zahnrad 70 kann sodann über eine vom Äußeren der Halterung 14 zugängliche Rändelmutter 48 verstellt werden, um so die Vorsprünge 42, 44, 46 zu einer Öffnung bzw. deren Innenseite auszurichten.

Selbstverständlich besteht auch die Möglichkeit, dass ein automatisches Anlegen der Vorsprünge 42, 44, 46 oder gleich wirkender Elemente an der Innenseite bzw. -wandung einer Öffnung erfolgt. So kann zumindest einer der Arme 36, 38, 40 in Richtung größeren Kreisdurchmessers kraftbeaufschlagt sein. Dies kann durch Federvorspannung erfolgen. In Fig. 8 wird dies durch ein Federelement 72 verdeutlicht, das auf die Randelemente 48 einwirkt. Somit zeigen die Positioniermittel bzw. -elemente, also die in dem Ausführungsbeispiel benutzten Füße 28, 30, 32 das Bestreben, automatisch nach außen geschwenkt zu werden. Folglich ist es zur Selbstzentrierung allein erforderlich, dass zunächst einer der Füße entgegen der Federkraft nach innen verschwenkt wird, um nach Aufsetzen auf die Öffnung die Füße 28, 30, 32 freizugeben, wodurch die Selbstzentrierung des Lotstrahls 15 auf den Mittelpunkt der Öffnung erfolgt.

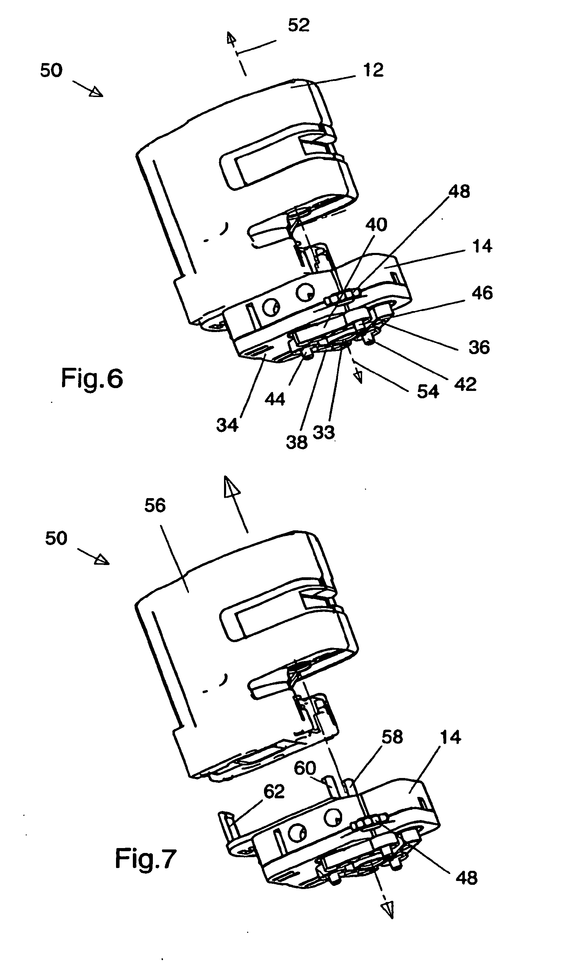

Die erfindungsgemäße Lehre ist für jedwedes Lasermessgerät geeignet, mit dem ein Laserstrahl erzeugt wird, der senkrecht zu der von Positioniermittel bzw. -elementen aufgespannten Ebene verläuft. Dies soll anhand der Fig. 6 und 7 rein prinzipiell verdeutlicht werden. Dabei werden für gleiche Elemente gleiche Bezugszeichen wie im Zusammenhang mit den Fig. 1 - 4 benutzt.

So ist ein Messgerät 50 dargestellt, in dem ein Lotstrahl 54 erzeugt wird. Zu dem Lotstrahl 54 verläuft im Ausführungsbeispiel antiparallel ein Strahl 52. Dieser Strahl 52 und damit der Lotstrahl 54 verlaufen senkrecht zu der Ausrichtfläche 34 der Halterung 14 und somit zu der von den freien Unterseiten der verschwenkbaren Arme 36, 38, 40 aufgespannten Ebene, die von den insbesondere eine Zylinderform aufweisenden Vorsprünge 42, 44, 46 überragt wird.

Wie die Fig. 6 und 7 verdeutlichen, ist das Gehäuse 56 des Lasermessgerätes 50 lösbar mit der Halterung 14 verbunden. Ist in den Ausführungsbeispielen nach den Fig. 1 - 4 eine Magnetverbindung vorgesehen, so ist die Halterung 14 des Lasermessgeräts 50 mit dem Gehäuse 12 mechanisch über Rastfinger 58, 60, 62 verbunden, um rein beispielhaft eine Möglichkeit einer Verbindung zu verdeutlichen.

Der Mittelpunkt der von den Positioniermittel bzw. -elementen 28, 30, 32 aufgespannten Kreise verläuft entsprechend der Fig. 1 - 4 innerhalb der Durchbrechung 33 in der Halterung 14. Die Durchbrechung 33 wird dabei von dem Laserstrahl 54 durchsetzt, der antiparallel zu dem Strahl 52 verläuft, der von der Kopffläche 22 des Gehäuses 12 ausgeht.

## Patentansprüche

1. Lasermessgerät (10, 50) umfassend ein Gehäuse (12, 56) mit einer in diesem vorhandenen Lasereinrichtung zum Erzeugen und Projizieren zumindest eines LaserStrahls (13, 15, 17, 19, 52, 54) senkrecht zu einer Ausrichtfläche (20, 34) des Gehäuses oder einer mit dem Gehäuse (12, 56) verbundenen Halterung (14),
**dadurch gekennzeichnet,**
**dass** der Ausrichtfläche (20, 34) zumindest drei synchron und gekoppelt verstellbare Positionierelemente (28, 30, 32) zugeordnet sind,
**dass** jedes Positionierelement (28, 30, 32) einen Arm (36, 38, 40) umfasst, der um eine senkrecht zu der Ausrichtfläche (20, 34) oder zu einer von Auflageflächen der Arme aufgespannten Ebene verlaufende Achse (27, 29, 31) schwenkbar ist und in seinem freien Endbereich einen von der Ausrichtfläche weggerichteten abragenden Vorsprung (42, 44, 46) aufweist, dass die Vorsprünge auf einem Kreis liegen, dessen Mittelpunkt von dem senkrecht zu der Ausrichtfläche (20, 34) verlaufenden Laserstrahl (15, 54) oder dessen Verlängerung durchsetzt ist, wobei die Positionierelemente derart angeordnet sind, dass beim synchronen Verstellen der Positionierelemente die Vorsprünge unabhängig vom Schwenkwinkel stets auf einem Kreis liegen, wobei die Kreise unterschiedlicher Durchmesser denselben Mittelpunkt aufweisen, der von dem Laserstrahl oder dessen Verlängerung durchsetzt ist.

2. Lasermessgerät nach Anspruch 1,
**dadurch gekennzeichnet,**
**dass** das Positionierelement (28, 30, 32) entlang einer Nut, einer Kurve oder eines Kulissenschlitzes geführt radial verstellbar ist und/oder dass die Positioniermittel (28, 30, 32) mit Führungselementen in Form von Exzenterkurven oder Kurvenbahnen folgenden Nuten zum radialen synchronen Verstellen wechselwirken.

3. Lasermessgerät nach zumindest Anspruch 1,
**dadurch gekennzeichnet,**
**dass** die Ausrichtfläche (20, 34) eine von dem Laserstrahl (15, 54) oder einem in dessen Verlängerung verlaufenden zweiten Laserstrahl durchsetzte Durchbrechung (33) aufweist, zu der koaxial der Kreis verläuft, auf dem die Vorsprünge (42, 44, 46) der Positionierelemente (28, 30, 32) liegen, wobei insbesondere die Durchbrechung (33) in der Halterung (14) Aufnahme für ein Stativ ist.

4. Lasermessgerät nach Anspruch 1,
**dadurch gekennzeichnet,**
**dass** von jedem Arm (36, 38, 40) und koaxial zu der Schwenkachse (27, 29, 31) angeordnet ein Mitnehmerelement ausgeht und dass die Mitnehmerelemente sämtlicher Arme mit einem Synchronisierungselement wechselwirken, das um den Mittelpunkt des Kreises drehbar ist, wobei insbesondere das Mitnehmerelement ein Satellitenzahnrand (64, 66, 68) und das Synchronisierungselement ein zentrales Zahnrad (70) ist.

5. Lasermessgerät nach zumindest Anspruch 1,
**dadurch gekennzeichnet,**
**dass** zumindest eines der Positionierelemente (28, 30, 32) in Richtung zu vergrößerndem Kreisdurchmesser kraftbeaufschlagt wie federvorgespannt ist.

6. Lasermessgerät nach zumindest Anspruch 4,
**dadurch gekennzeichnet,**
**dass** das Synchronisierungselement mit einem von außerhalb des Gehäuses (12) bzw. der Halterung (14) betätigbaren Stellelement (48) wie Rändelrad verbunden ist.

7. Lasermessgerät nach zumindest Anspruch 1,
**dadurch gekennzeichnet,**
**dass** die Ausrichtfläche Bodenfläche (20) des Gehäuses (12) und/oder Außenfläche der mit dem Gehäuse (12) verbundenen Halterung (14) ist.

8. Lasermessgerät nach zumindest Anspruch 1,
**dadurch gekennzeichnet,**
**dass** die Lasereinrichtung zur Erzeugung eines den Laserstrahl bildenden Lotstrahls (15, 54) selbstzentrierend in dem Gehäuse (12) angeordnet ist.

9. Lasermessgerät nach zumindest Anspruch 1,
**dadurch gekennzeichnet,**
**dass** die Halterung (14) mit dem Gehäuse (12) über Magnete oder mechanisch verbunden ist.

10. Lasermessgerät nach zumindest Anspruch 1,
**dadurch gekennzeichnet,**
**dass** der von der Lasereinrichtung erzeugte Laserstrahl in vier senkrecht zueinander stehende Laserstrahlen (13, 15, 17, 19) aufteilbar ist, wobei zwei Laserstrahlen (52, 54) als Lotstrahlen ineinander übergehen, von denen einer den Mittelpunkt des Kreises durchsetzt.

## Claims

1. Laser measuring device (10, 50) comprising a housing (12, 56) with a laser device provided therein for generating and projecting at least one laser beam (13, 15, 17, 19, 52, 54) perpendicular to an alignment surface (20, 34) of the housing, or to a mount (14) that is connected to the housing (12, 56),
**characterized in**
**that** at least three synchronously and coupled adjustable positioning elements (28, 30, 32) are allocated to the alignment surface (20, 34)
**that** each positioning element (28, 30, 32) comprises an arm (36, 38, 40), which is pivotable about an axis (27, 29, 31) running perpendicular to the alignment surface (20, 34) or to a plane defined by bearing surfaces of the arms and exhibits in its free end region a projection (42, 44, 46) facing away from the alignment surface, that the projections lie on a circle, the center point of which is passed through by the laser beam (15, 54) that extends perpendicular to the alignment surface (20, 34), or by its extension, wherein the positioning elements are arranged such that with the synchronous movement of the positioning elements the projections lie always on a circle independently of the pivoting angle, wherein circles with different diameters have the same center point which is passed through by the laser beam or its extension.

2. Laser measuring device according to claim 1,
**characterized in**
**that** guided along a groove, a curve, or a sliding slit the positioning element (28, 30, 32) is radially adjustable and/or that for radial synchronous movement the positioning elements (28, 30, 32) interact with grooves following guiding elements in form of eccentric curves or curved paths.

3. Laser measuring device according to at least claim 1,
**characterized in**
**that** the alignment surface (20, 34) has an opening (33), through which passes the laser beam (15, 54), or a second laser beam that runs in the extension of the first, said opening extending coaxially to the circle on which the projections (42, 44, 46) of the positioning elements (28, 30, 32) lie, wherein especially the opening (33) in the mount (14) is a receptacle for a stand.

4. Laser measuring device according to claim 1,
**characterized in**
**that** from each arm (36, 38, 40) and arranged coaxially to the pivoting axis (27, 29, 31) a driver element extends, and that the driver elements of all the arms interact with a synchronizing element, which is rotatable around the center point of the circle, wherein especially the driver element is a satellite toothed gear (64, 66, 68) and the synchronizing element is a central toothed gear (70).

5. Laser measuring device according to at least claim 1,
**characterized in**
**that** at least one of the positioning elements (28, 30, 32) is acted upon by force, such as spring prestressed, in direction of diameter of the circle to be enlarged.

6. Laser measuring device according to at least claim 4,
**characterized in**
**that** the synchronizing element is connected to an adjustment element (48), such as knurling wheel, controllable from outside the housing (12), respectively the mount (14).

7. Laser measuring device according to at least claim 1,
**characterized in**
**that** the alignment surface is base surface (20) of the housing (12) and/ or outer surface of the mount (14) that is connected to the housing (12).

8. Laser measuring device according to at least claim 1,
**characterized in**
**that**, for generating a plumb beam (15, 54) forming the laser beam, the laser device is arranged auto-centering in the housing (12).

9. Laser measuring device according to at least claim 1,
**characterized in**
**that** the mount (14) is connected to the housing (12) via magnets or mechanically.

10. Laser measuring device according to at least claim 1,
**characterized in**
**that** the laser beam that is generated by the laser device is dividable into four laser beams (13, 15, 17, 19) that are perpendicular to one another, wherein two laser beams (52, 54) pass into each other as plumb beams, one of which passing through the center point of the circle.

## Revendications

1. Instrument de mesure à laser (10, 50) comprenant un boîtier (12, 56) dans lequel est disposé un dispositif à laser destiné à produire et à projeter au moins un rayon laser (13, 15, 17, 19, 52, 54) perpendiculaire à une face d'alignement (20, 34) du boîtier ou à un support (14) relié au boîtier (12, 56),
**caractérisé en ce**
**qu'**à la face d'alignement (20, 34) sont associés au moins trois éléments de positionnement (28, 30, 32) réglables de manière synchrone et conjuguée,
**que** chaque élément de positionnement (28, 30, 32) comprend un bras (36, 38, 40) qui peut pivoter autour d'un axe (27, 29, 31) perpendiculaire à la face d'alignement (20, 24) ou à un plan défini par des surfaces d'appui des bras, et qui présente à son extrémité libre une proéminence (42, 44, 46) faisant saillie dans le sens opposé à la face d'alignement, que les proéminences sont situées sur un cercle dont le centre est traversé par le rayon laser (15, 54) perpendiculaire à la face d'alignement (20, 34), ou par son prolongement, sachant que les éléments de positionnement sont agencés de manière telle que lors du déplacement synchrone des éléments de positionnement, les proéminences sont constamment situées sur un cercle indépendamment de l'angle de pivotement, et que les cercles de différents diamètres présentent le même centre qui est traversé par le rayon laser ou son prolongement.

2. Instrument de mesure à laser selon la revendication 1,
**caractérisé en ce**
**que** l'élément de positionnement (28, 30, 32) est guidé radialement de manière réglable le long d'une gorge, d'une came ou d'un coulisseau et/ou que les éléments de positionnement (28, 30, 32) interagissent avec des éléments de guidage sous forme de gorges suivant des cames à excentrique ou des pistes de came pour effectuer un déplacement radial synchrone.

3. Instrument de mesure à laser selon au moins la revendication 1,
**caractérisé en ce**
**que** la face d'alignement (20, 34) présente une ouverture (33) traversée par le rayon laser (15, 54) ou par un deuxième rayon laser s'étendant dans le prolongement de celui-ci, par rapport à laquelle s'étend coaxialement le cercle sur lequel sont situées les proéminences (42, 44, 46) des éléments de positionnement (28, 30, 32), sachant en particulier que l'ouverture (33) dans le support (14) est un logement pour un trépied.

4. Instrument de mesure à laser selon la revendication 1,
**caractérisé en ce**
**que** de chaque bras (36, 38, 40), et coaxialement par rapport à l'axe de pivotement (27, 29, 31), part un élément entraîneur et que les éléments entraîneurs de tous les bras interagissent avec un élément synchroniseur, qui peut pivoter autour du centre du cercle, sachant en particulier que l'élément entraîneur est une roue dentée satellite (64, 66, 68) et que l'élément synchroniseur est une roue dentée centrale (70).

5. Instrument de mesure à laser selon au moins la revendication 1,
**caractérisé en ce**
**qu'**au moins un des éléments de positionnement (28, 30, 32) est soumis à une force, tel que précontraint par ressort, en direction du diamètre de cercle à accroître.

6. Instrument de mesure à laser selon au moins la revendication 4,
**caractérisé en ce**
**que** l'élément synchroniseur est relié à un élément de réglage (48), tel qu'une molette de réglage, actionnable depuis l'extérieur du boîtier (12) ou du support (14).

7. Instrument de mesure à laser selon au moins la revendication 1,
**caractérisé en ce**
**que** la face d'alignement est une face inférieure (20) du boîtier (12) et/ou une face extérieure du support (14) relié au boîtier (12).

8. Instrument de mesure à laser selon au moins la revendication 1,
**caractérisé en ce**
**que** le dispositif à laser destiné à produire un rayon d'aplomb (15, 54) constituant le rayon laser est disposé de manière autocentreuse dans le boîtier (12).

9. Instrument de mesure à laser selon au moins la revendication 1,
**caractérisé en ce**
**que** le support (14) est relié au boîtier (12) par des aimants ou mécaniquement.

10. Instrument de mesure à laser selon au moins la revendication 1,
**caractérisé en ce**
**que** le rayon laser produit par le dispositif à laser peut être partagé en quatre rayons laser (13, 15, 17, 19) perpendiculaires entre eux, sachant que deux rayons laser (52, 54) se fondent l'un dans l'autre en tant que rayons d'aplomb, dont l'un traverse le centre du cercle.
